Europäisches Patentamt

(19) European Patent Office

Office européen des brevets

(11) Veröffentlichungsnummer: **0 080 744**
**B1**

(12) **EUROPÄISCHE PATENTSCHRIFT**

(45) Veröffentlichungstag der Patentschrift:
**05.02.86**

(51) Int. Cl.⁴: **F 16 H 25/20**

(21) Anmeldenummer: **82201279.5**

(22) Anmeldetag: **14.10.82**

(54) Schraubantrieb für Keilschuh.

(30) Priorität: **30.11.81 CH 7642/81**

(43) Veröffentlichungstag der Anmeldung:
**08.06.83 Patentblatt 83/23**

(45) Bekanntmachung des Hinweises auf die Patenterteilung:
**05.02.86 Patentblatt 86/6**

(84) Benannte Vertragsstaaten:
**CH DE FR GB LI**

(56) Entgegenhaltungen:
**CH - A - 84 126**
**DE - C - 507 583**
**FR - A - 1 099 580**

(73) Patentinhaber: **BBC Aktiengesellschaft Brown, Boveri & Cie., Haselstrasse, CH-5401 Baden (CH)**

(72) Erfinder: **Meylan, Pierre, Glärnischstrasse 19, CH-5432 Neuenhof (CH)**

## Beschreibung

Die Erfindung betrifft einen Schraubantrieb für eine aus zwei Keilschuhhälften bestehenden Keilschuh, bei dem' die Keilschuhhälften mittels einer Gewindespindel über ihre Gleitflächen gegeneinander verstellt werden und dabei die Keilsachuhhöhe variieren.

Keilschuhe werden überall dort verwendet, wo variable Abstände zwischen einzelnen Maschinenteilen kraftschlüssig überbrückt werden müssen. Dies geschieht vorzugsweise beim Ausrichten einer Maschine auf dem Fundament, beispielsweise bei einem Lagergehäuse einer Turbomaschine.

Eingangs genannte Keilschuhe mit Schraubantrieb sind bekannt (vergleiche das Buch "Kinematik", Getriebelehre, H.J. Knab, 1930, Seite 59, Abbildung 408). Ueber eine axial fixierte Gewindespindel wird hierbei eine erste Keilschuhhälfte in Spindellängsrichtung bewegt und verstellt somit eine auf ihr gleitende zweite Keilschuhhälfte. Neben relativ grosser Einbauhöhe sind zusätzliche, zu bearbeitende Bauteile erforderlich, um die Gewindespindel in einem Block zu halten und zu führen. Darüber hinaus haben solche bekannte Vorrichtungen eine beschränkte Verstellhöhe von etwa 10 % der minimalen Einbauhöhe. Bekannt sind auch Schraubantriebe mit einer mit Rechts- und Linkagewinde veraehenen Mutter, die mit einer längsgeteilten Schraubenapindel zusammenwirkt, wobei ein Spindelteil mit Rechtsgewinde und ein anderer Spindelteil mit Linksgewinde versehen ist (DE-C-507 583, FR-A-10 99 580).

Der im Kennzeichen des Patentanspruchs 1 definierten Erfindung liegt die Aufgabe zugrunde, einen Schraubantrieb für Keilschuhe zu schaffen, der nur sehr wenige, einfache Bauteile aufweist und wobei der Verstellbereich jenen von bekannten Keilschuhverstellungen bei gleichem Keilwinkel um ein Mehrfaches übersteigt.

In der Zeichnung ist ein Ausführungsbeispiel der Erfindung vereinfacht dargestellt.

Es zeigt:

Fig. 1 eine Schnittdarstellung durch einen Keilschuh;

Fig. 2a und 2b Keilschuhausbildungen in einem Schnitt nach der Linie A-A in Fig. 1;

Fig. 2c und 2d weitere Ausführungsformen möglicher Keilschuhgestaltungen;

Fig. 3 schematisch den erzielbaren Höhenverstellbereich.

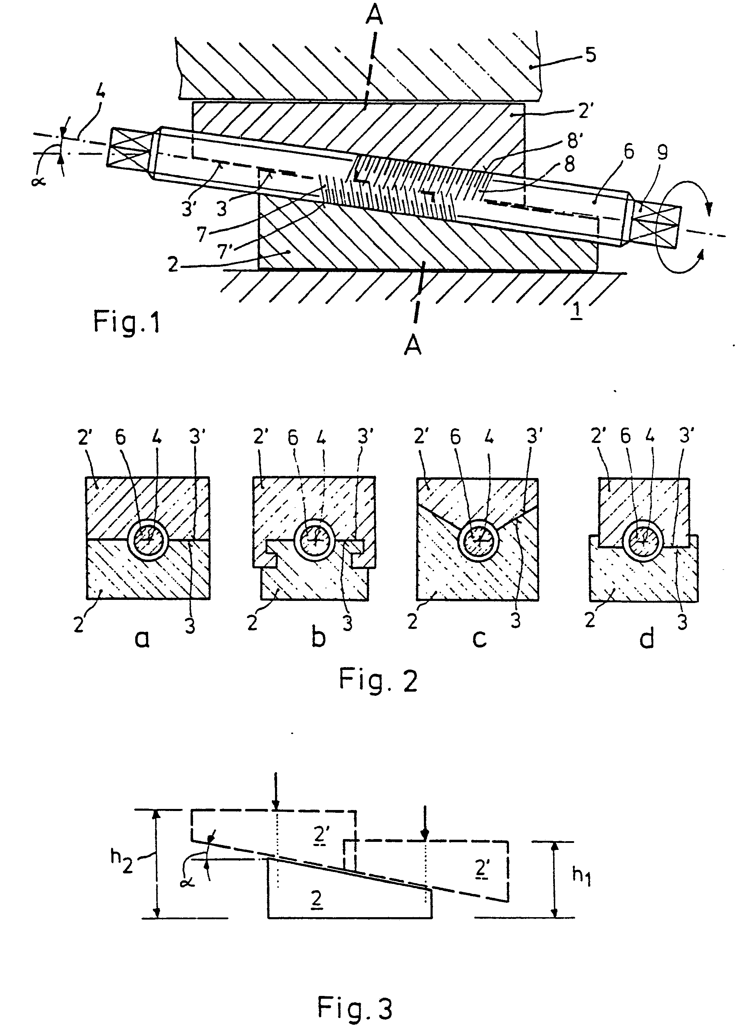

Der in Fig. 1 gezeigte Keilschuh besteht aus zwei mit ihren Gleitflächen 3, 3' aufeinander gleitenden, gleich langen Keilschuhhälften 2, 2'. Die untere Keilschuhhälfte 2 ist auf dem Fundament 1 unverrückbar angeordnet; die obere Keilschuhhälfte 2' trägt ein (in der Zeichenebene) gleitbares Maschinenteil 5. Der Keilwinkel x zwischen den Gleitflächen 3, 3' und den - dem Maschinenteil 5 resp. Fundament 1 zugekehrten - Tragflächen beträgt 8°. Angetrieben wird der Keilschuh durch eine Gewindespindel 6; der Antrieb kann beiseitig erfolgen, was im vorliegenden Fall durch an beiden Enden der Gewindespindel 6 angebrachte Sechskantansätze 9 vorzunehmen ist.

Die Gewindespindel 6 ist a f ihrer ganzen tragenden Länge - wozu die Sechskantansätz 9 nicht zu zählen sind - mit einem Rechtsgewinde 7 und einem Linksgewinde 8 versehen. Die Steigung beider Gewinde kann entweder gleich oder unterschiedlich sein. Ebenso können die beiden Gewinde einoder mehrgängig sein. Es ist auch durchaus möglich, für beide Gewinde sowohl gleiche als auch unterschiedliche Steigungen und Gangzahlen zu kombinieren. Es ist lediglich darauf zu achten, dass für beide Gewinde gleiche Aussendurchmesser und gleiche Profilhöhe gewählt werden.

Die Gewinde werden sukksessiv in die Spindel eingearbeitet. Es versteht sich, dass bei der Herstellung des zweiten Gewindes grosse Teile des vorgängig angebrachten ersten Gewindes abgearbeitet werden. Den grössten tragenden Flankenanteil behält man zurück, wenn gleiches Rechts- und Linksgewinde vorgesehen ist. Dennoch wird auch hierbei die grösstmögliche, durch den Aussendurchmesser vorgegebene Tragtiefe an lediglich zwei entgegengesetzten Stellen am Bolzenumfang erzielt. Die geringste Tragtiefe fällt sn zwei entgegengesetzten Stellen an, welche gegenüber den erstgenannten um 90° versetzt sind. Es handelt sich hierbei um die Stellen am Bolzenumfang, an denen sich die Gewindeprofile kreuzen.

Für die Keilschuhhälften 2, 2' sind kompatible Gewinde 7', 8' zu wählen, wobei es unerheblich ist, welche Keilschuhhälfte das Linksgewinde und welche das Rechtsgewinde trägt. Bei aufeinanderlieenden Gleitflächen 3, 3' verlaufen diese Gewinde 7', 8' koaxial und erstrecken sich in der Gleitrichtung, im vorliegenden Fall über die ganze Länge der Keilschuhhälften 2, 2'. Die Gewindeaschse 4 liegt in der Ebene der Gleitflächen 3, 3'. Somit trägt jede Keilschuhhälfte einen halben Gewindeumfang, d.h. bei gleichem Linksund Rechtsgewinde ist die Belastung für beide Gewinde 7', 8' gleich gross.

Die Wirkungsweise de Schraubenantriebs ist folgende:

Bei einer Umdrehung der Gewindespindel 6 wird bei feststehender unterer Keilschuhhälfte 2 die obere Keilschuhhälfte 2' folgendermassen bewegt. Die Spindel 6 bewegt sich in die feststehende untere Keilschuhhälfte 2 hinein und zwar um den Betrag der dortigen Gewindesteigung. Mit der gleichen Umdrehung vollzieht die obere Keilschuhhälfte 2' um den Betrag der dortigen Gewindesteigung eine Relativbewegung zur Spindel 6. Die obere Keilschuhhälfte 2' verschiebt sich somit bei einer Spindelumdrehung parallel zur Spindelachse 4 um einen Betrag, welcher der Summe sus'beiden Gewindesteigungen entspricht. Parallel zur Spindelachse heisst in diesem Fall, dass beide Keilschuhhälften auf ihren Gleitflächen 3, 3' um diesen Betrag auseinandergleiten (oder zueinander, je nach Drehrichtung), und bei gegebenen Keilwinkel eine entsprechende Höhenveränderung des Keilschuhs und somit ein vertikales Anheben oder Absenken des Msschinenteils 5 bewirken.

Aus Fig. 3 ist ersichtlich, dass extreme Stellungen der Keilschuhhälften zueinander durchaus möglich sind, was sich dadurch ausdrückt, dass der Keilschuh eine sehr niedrige Einbsuhöhe $h_1$ und eine ausserordentlich grosse Verstellhöhe $h_2 - h_1$ aufweist.

Die Fig. 2 zeigt mögliche Ausführungsformen des Keilschuhs. In 2a und 2b liegt die Gewindeachse 4 jeweils in der Ebene der Gleitflächen 3, 3'. Bei der billigen symmetrischen Ausführung beider Keilschuhhälften 2, 2' nach 2a muss die Gewindespindel 6 die Seitenführung übernehmen. Diesbezüglich höheren Ansprüchen genügt die Hammerkopfausführung nach Fig. 2b ebenso wie die Nut- und die V-Ausbildung gemäss 2d und 2c, wobei bei den zwei letztgenannten die Gewindeachse 4 nicht in der Gleitebene (3, 3') liegt. Demzufolge unterscheiden sich hier auch die Gewindeanteile beider Keilschuhhälften, was sich in unterschiedlichen Spannungszuständen während des Betriebes ausdrückt.

Es versteht sich, dass beim Erfindungsgegenstand jede Art von kinematischer Umkehr möglich ist. Unabhängig von der Einbaulage des Keilschuhs, d.h. horizontal, geneigt oder vertikal und unabhängig davon, ob eine der Keilschuhhälften fixiert ist oder nicht, ist mit einer Spindelumdrehung immer die gleiche Höhenveränderung des Keilschuha möglich. Entsprechend vielfältig sind die Anwendungsmöglichkeiten, womit zum Ausdruck gebracht ist, dass die Erfindung sich nicht auf das Dargestellte und Beschriebene beschränkt.

**Patentansprüche**

1. Schraubantrieb für einen aus zwei Keilschuhhälften (2, 2') beatehenden Keilschuh, bei dem die Keilschuhhälften (2, 2') mittels einer Gewindespindel (6) über ihre Gleitflächen (3, 3') gegeneinander verstellt werden und dabei die Keilschuhhöhe variieren, dadurch gekennzeichnet, dass die Gewindespindel (6) über ihre ganze tragende Länge mit einem Rechtsgewinde (7) und einem Linksgewinde (8) versehen ist und in beide Keilschuhhälften (2, 2') eingreift, wozu die übereinander gleitenden Keilschuhhälften (2, 2') ein in der Gleitrichtung verlaufendes, koaxiales Gewinde aufweisen, welches in der einen Keilschuhhälfte (2) als Rechtsgewinde (7') und in der anderen Keilschuhhälfte (2')als Linksgewinde (8') ausgeführt ist.

2. Schraubantrieb nach Anspruch 1, dadurch gekennzeichnet, dass das Gewinde (7', 8') beider Keilschuhhälften (2, 2') gleich lang ist.

3. Schraubantrieb nach Anspruch 1, dadurch gekennzeichnet, dass das Rechts- und/oder das Linksgewinde ein- oder mehrgängig ausgeführt ist.

4. Schraubantrieb nach Anspruch 1 oder 3, dadurch gekennzeichnet, dass das Rechts- und das Linksgewinde mit gleicher oder unterschiedlicher Steigung ausgeführt ist.

5. Schraubantrieb nach Anspruch 1, dadurch gekennzeichnet, dass die Gewindespindel (6) zweiseitig betätigbar ist.

6. Schraubantrieb nach Anspruch 1, dadurch gekennzeichnet, dass die Längsachse (4) der Gewindespindel (6) in der Ebene der Gleitflächen (3, 3') verläuft (Fig. 2a, 2b).

7. Schraubantrieb nach Anapruch 1, dadurch gekennzeichnet, dass die Längaachae (4) der Gewindeapindel (6) auaaerhalb der Ebene der Gleitflächen (3, 3') verläuft (Fig. 2c, 2d).

**Claims**

1. Screw drive for a wedge shoe consisting of two wedge shoe halves (2, 2'), in which the wedge shoe halves (2, 2') are displaced relative to one another via their sliding surfaces (3, 3') by means of a threaded spindle (6) and at the same time vary the wedge shoe height, characterised in that the threaded spindle (6) is provided over its entire bearing length with a right-hand thread (7) and a left-hand thread (8) and engages into both wedge shoe halves (2, 2'), for which the wedge shoe halves (2, 2') sliding over one another have a coaxial thread running in the sliding direction which is made as a righthand thread (7') in one wedge shoe half (2) and as a lefthand thread (8') in the other wedge shoe half (2').

2. Screw drive according to Claim 1, characterised in that the thread (7', 8') of both wedge shoe halves (2, 2') is of the same length.

3. Screw drive according to Claim 1, characterised in that the right-hand and/or left-hand thread is made single pitch or multi-pitch.

4. Screw drive according to Claim 1 or 3, characterised in that the right-hand and the left-hand thread is made with the same or different pitch.

5. Screw drive according to Claim 1, characterised in that the threaded spindle (6) can be actuated at both sides.

6. Screw drive according to Claim 1, characterised in that the longitudinal axis (4) of the threaded spindle (6) runs in the plane of the sliding surfaces (3, 3') (Figure 2a, 2b).

7. Screw drive according to Claim 1, characterised in that the longitudinal axis (4) of the threaded spindle (6) runs outside the plane of the sliding surfaces (3, 3') (Figure 2c, 2d).

**Revendications**

1. Commande à vis pour un coin composé de deux demi-coins (2, 2'), dans laquelle les demi- coins (2, 2') peuvent être déplacés l'un par rapport à l'autre sur leurs surfaces de glissement (3, 3') au moyen d'une broche filetée (6) et provoquent ainsi une variation de la hauteur du coin, caractérisée en ce que la broche filetée (6) est pourvue sur toute sa longueur portante d'un filet à droite (7) et d'un filet à gauche (8) et attaque les deux demi-coins (2, 2'), les deux demi-coins (2, 2') glissant l'un sur l'autre étant à cet effet pourvus d'un filet coaxial s'étendant dans la direction de glissement, filet qui est un filet à droite (7') dans un des demicoins (2) et un filet à gauche (8') dans l'autre demicoin (2').

2. Commande à vis suivant la revendication 1, caractérisée en ce gue les filets (7', 8') des deux demi-coins (2, 2') ont la même longueur.

3. Commande à vis suivant la revendication 1, caractérisée en ce que le filet à droite et/ou le filet à gauche comporte une ou plusieurs entrée(s).

4. Commande à vis suivant la revendication 1 ou 3, caractérisée en ce gue le filet à droite et le filet à gauche ont des pas égaux ou différents.

5. Commande à vis suivant la revendication 1, caractérisée en ce que la broche filetée (6) peut être manoeuvrée par ses deux extrémités.

6. Commande à vis suivant la revendication 1, caractéris1e en ce que l'axe longitudinal (4) de la broche filetée (6) se trouve dans le plan des surfaces de glissement (3, 3') (Fig. 2a, 2b).

7. Commande à vis suivant la revendication 1, caractérisée en ce que l'axe longitudinal (4) de la broche filetée (6) se trouve hors du plan des surfaces de glissement (3, 3')(Fig. 2c,2d).

Fig.1

Fig. 2

Fig.3